# EUROPÄISCHE PATENTSCHRIFT

(11) **EP 0 584 318 B1**
(45) Veröffentlichungstag und Bekanntmachung des Hinweises auf die Patenterteilung: **15.05.1996**
(21) Anmeldenummer: 93905085.2
(22) Anmeldetag: 17.03.1993
(51) Int. Cl.: D01F 2/00, D01D 5/06, D01D 5/088, C08J 5/18

(54) **VERFAHREN ZUR HERSTELLUNG CELLULOSISCHER FORMKöRPER**
PROCESS FOR MANUFACTURING CELLULOSE MOULDED BODIES
PROCEDE DE FABRICATION D'ELEMENTS MOULES CELLULOSIQUES

(30) Priorität: 17.03.1992 AT 537/92
(43) Veröffentlichungstag der Anmeldung: 02.03.1994
(60) Teilanmeldung: 95105349.5
(73) Patentinhaber: LENZING AKTIENGESELLSCHAFT, A-4860 Lenzing (AT)
(72) Erfinder: ZIKELI, Stefan, A-4844 Regau (AT); RAUCH, Ernst, A-4861 Schörfling (AT); KOBERGER, Hermann, A-4871 Zipf (AT); ECKER, Friedrich, A-4850 Timelkam (AT); RÜF, Hartmut, A-4840 Vöcklabruck (AT); JURKOVIC, Raimund, A-4860 Lenzing (AT); SCHWENNINGER, Franz, A-4860 Lenzing (AT)
(74) Vertreter: Schwarz, Albin, Dr.
(86) Internationale Anmeldenummer: AT9300053
(87) Internationale Veröffentlichungsnummer: WO9319230

(56) Entgegenhaltungen:
- EP-A- 0 105 169
- EP-A- 0 494 852
- GB-A- 807 248
- GB-A- 957 534
- US-A- 4 144 080
- US-A- 4 261 943
- DATABASE WPI Section Ch, Week 8522, Derwent Publications Ltd., London, GB; Class A, AN 85-128668
- PATENT ABSTRACTS OF JAPAN vol. 10, no. 310 (C-379)22. Oktober 1986

## Beschreibung

Die Erfindung betrifft ein Verfahren zur Herstellung cellulosischer Formkörper indem eine Lösung von Cellulose in einem tertiären Aminoxid in warmem Zustand geformt und die geformte Lösung in ein Fällbad eingebracht wird, um die enthaltene Cellulose zu fällen, wobei die warme geformte Lösung vor dem Einbringen in das Fällbad gekühlt wird, indem sie einem Gasstrom ausgesetzt wird.

Aus der US-PS 2,179,181 ist bekannt, daß tertiäre Aminoxide Cellulose zu lösen vermögen und daß aus diesen Lösungen durch Fällung cellulosische Formkörper gewonnen werden können. Ein Verfahren zur Herstellung derartiger Lösungen ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulose-Suspension wird erhitzt und unter Druckverminderung wird so lange Wasser abgezogen, bis die Cellulose in Lösung geht. Das Verfahren wird in einer eigens entwickelten, evakuierbaren Rühreinrichtung durchgeführt.

Aus der DE-A - 28 44 163 und der DD-A - 218 121 ist zur Herstellung von Cellulosefasern oder Cellulosefolien bekannt, zwischen Spinndüse und Fällbad eine Luftstrecke bzw. Luftspalt zu legen, um einen Düsenverzug zu erreichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Im Luftspalt besteht jedoch die Gefahr, daß die noch nicht koagulierten Einzelfäden aufgrund ihrer extrem hohen Klebrigkeit aneinander haften bzw. miteinander verschmelzen und somit ein Faserspinnen unmöglich machen. Die Verklebungsgefahr ist naturgemäß umso größer, je länger die Strecke zwischen Düsenplatte und Fällbadoberfläche ist (Luftstrecke). Eine lange Strecke wäre aber andererseits vorteilhaft, da für die Orientierung der Cellulosemoleküle eine gewisse Zeit erforderlich ist. Um aber bei langer Luftstrecke die Verklebungsgefahr zu minimieren, muß die Lochdichte der Spinndüse verringert werden, was sich wiederum nachteilig auf die Wirtschaftlichkeit des Spinnverfahrens auswirkt.

Eine kurze Spinnstrecke hingegen erlaubt zwar ein Spinnen mit hoher Lochdichte, verschlechtert aber andererseits die Spinnsicherheit, da durch die Kapillarwirkung der Filamente Fällbadflüssigkeit an die Austrittsseite der Spinnbohrungen bzw. Spinnlöcher gelangt. Dazu kommt noch, daß die geformte, aber noch flüssige Fadenmasse dem Fadenverzug nicht standhält, d.h., daß die gewünschte Fadenstärke nicht erreicht wird. Gleichzeitig konnte festgestellt werden, daß sich infolge verkürzter Aufenthaltszeit im Luftspalt die textilen Faserdaten hinsichtlich Festigkeit und Dehnung kaum beeinflussen lassen.

Aus der DD-A - 218 121 ist vorbeschrieben, daß sich eine Verkürzung der Strecke des Düsenverzugs und damit eine Abnahme der Gefahr des Verklebens der Einzelfäden ohne Einfluß auf die Spinnsicherheit oder Fadenfestigkeit durch Zugabe eines Polyalkylenethers, insbesondere von Polyethylenglykol, zur Spinnlösung erreichen läßt. Auch in der DE-A - 28 44 163 wird auf die extreme Klebrigkeit des gesponnen Fäden hingewiesen und zu deren Beseitigung u.a. das Besprühen der Fäden im Luftspalt mit einer gegenüber Cellulose nichtlösenden Flüssigkeit vorgeschlagen.

Versuche haben gezeigt, daß alle Lösungsvorschläge nicht befriedigend sind und zwar entweder hinsichtlich der erreichbaren Spinnfadendichten oder hinsichtlich der Beeinflussung der textilen Eigenschaften der Cellulosefasern.

Gemäß der DE-A - 28 44 163 beträgt der Abstand zwischen Spinndüse und Fällbadoberfläche zwar 270 mm, jedoch läßt sich eine Spinnfadendichte von offenbar nur etwa 0,0046 Fäden/mm (entsprechend einer Spinnlochdichte der Spinndüse von 0,0046 Loch/mm) erreichen. Mit einer derart geringen Lochdichte ist ein Spinnen im großtechnischen Maßstab nicht denkbar. Dazu müßten Spinndüsen mit einer Lochdichte von mehr als 0,1 Loch/mm eingesetzt werden. Derartige Düsen sind beispielsweise in der österreichischen Patentanmeldung A 2724/89 beschrieben.

Hier setzt nun die Erfindung an, welche sich somit die Aufgabe stellt, ein Verfahren zur Herstellung cellulosischer Formkörper bereitzustellen, bei welchem die Klebrigkeit der frisch extrudierten cellulosischen Formkörper vermindert ist, ohne daß es nötig ist, der Spinnmasse irgendwelche Zusätze zuzugeben und ohne daß die Oberfläche der Formkörper mit einem Fällungsmittel besprüht zu werden braucht. Die Erfindung stellt sich insbesondere die Aufgabe, ein Verfahren zur Herstellung cellulosischer Fäden bereitzustellen, wobei unter Verwendung einer Spinndüse mit hoher Lochdichte ein dichter Fadenverband gesponnen werden kann, welcher über eine große Luftstrecke dem Fällbad zugeführt wird, um die textilen Eigenschaften der gesponnen Fäden besser einstellen zu können. Trotz dichtem Fadenverband und trotz großer Luftstrecke soll es zu keinem Verkleben von einzelnen Fäden kommen.

Diese Aufgabe wird erfindungsgemäß gelöst, indem bei einem Verfahren der eingangs beschriebenen Art die warme, geformte Lösung dem Gasstrom unmittelbar nach dem Formen ausgesetzt wird.

Aus der US-A - 4,144,080 ist allgemein bekannt, gesponnene Fäden mit Luft zu kühlen. Um die Verklebungstendenz der Fäden zu verringern wird jedoch in der US-A - 4,144,080 vorgeschlagen, die Oberfläche der Fäden mit Wasser zu benetzen, was auch aus der DE-A - 28 44 163 bekannt ist, wie oben bereits dargelegt wurde.

Zur Herstellung cellulosischer Fäden durch Formung der cellulosischen Lösung mittels einer Spinndüse hat sich besonders bewährt, wenn die Spinnrichtung im wesentlichen im rechten Winkel zum Gasstrom steht. Es hat sich überraschenderweise gezeigt, daß das oben beschriebene Problem des Verklebens auf einfache Weise dadurch beseitigt werden kann, indem die frisch gesponnenen Fäden unmittelbar nach ihrer Bildung z.B. einem Luftstrom ausgesetzt werden. Bereits ein einfaches Anblasen des Fadenverbandes mit einem Ventilator bewirkt, daß mit Spinndüsen mit einer Lochdichte bis zu 0,7 Loch/mm gearbeitet und die Luftstrecke bis zu 70 mm lang gewählt werden kann, ohne daß es im Luftspalt zu einer Verklebung einzelner Fäden kommt.

Das erfindungsgemäße Verfahren eignet sich auch zur Herstellung cellulosischer Filme, wobei die cellulosische Lösung durch eine filmbildende Vorrichtung geführt wird und das dadurch gekennzeichnet ist, daß die Richtung der Filmbildung im wesentlichen im rechten Winkel zum Gasstrom steht.

Bei Verwendung von Spinndüsen mit noch höherer Lochdichte reicht das über einen Ventilator aufzubringende Strömungsprofil nicht mehr aus, um im gesamten Fadenverband eine gleichmäßige Abkühlung zu gewährleisten. Eine bevorzugte Ausgestaltung des erfindungsgemäßen Verfahrens besteht in diesem Fall darin, die warme, geformte Lösung mindestens zwei Gasströmen auszusetzen, wobei die geformte Lösung am besten an gegenüberliegenden Seiten von den Gasströmen getroffen wird.

Eine Ausführungsform dieser Variante des erfindungsgemäßen Verfahrens zur Herstellung cellulosischer Fäden besteht darin, daß die warme cellulosische Lösung durch eine Spinndüse mit einer Vielzahl von Spinnlöchern geführt wird, welche im wesentlichen ringförmig angeordnet sind, wobei die als gesponnene Fäden vorliegende warme, geformte Lösung den beiden Gasströmen derart ausgesetzt wird, daß ein Gasstrom radial nach außen und der andere radial nach innen gerichtet ist. Auf diese Weise ist es möglich, den Kühleffekt derart zu verstärken, daß Fadenverbände mit einer Dichte bis zu 1,4 Faden/mm über eine Strecke von mindestens 50 mm geführt werden können, ohne daß einzelne Fasern miteinander verkleben.

Zur Kühlung wird der warmen, geformten Lösung insbesondere eine Wärmemenge von mindestens 20 kJ/kg Lösung, vorzugsweise zwischen 20 und 350 kJ/kg Lösung, entzogen.

Das erfindungsgemäße Verfahren zur Herstellung cellulosischer Fäden aus einer Lösung von Cellulose in einem tertiären Aminoxid, wird zweckmäßigerweise in einer Vorrichtung durchgeführt, die eine Spinndüse mit Spinnlöchern umfaßt, wobei unmittelbar unterhalb der Spinnlöcher eine Zuführung für Kühlgas zur Kühlung der cellulosischen Fäden vorgesehen ist.

Eine besondere Ausgestaltung der erfindungsgemäß verwendeten Vorrichtung besteht darin, daß die Spinnlöcher der Spinndüse im wesentlichen ringförmig angeordnet sind und daß die Zuführung für Kühlgas im Zentrum des durch die Anordnung der Spinnlöcher gebildeten Ringes vorgesehen ist.

Zum gleichmäßigen Abkühlen von sehr dichten Fadenverbänden, welche aus einer Spinndüse mit einer Lochdichte von mehr als 0,7 Loch/mm extrudiert werden, hat es sich als vorteilhaft erwiesen, wenn noch zusätzlich ein weiterer Kühlgasstrom auf den Fadenverband gerichtet ist, welcher von außen zugeführt wird. Diese Ausgestaltung der erfindungsgemäß verwendeten Vorrichtung weist somit noch eine weitere Zuführung für Kühlgas auf, welche außerhalb der ringförmigen Spinnplatte angeordnet ist. In diesem Fall wird der ringförmige Fadenverband sowohl an seiner Innenseite, als auch an seiner Außenseite dem Kühlgas ausgesetzt. Es hat sich gezeigt, daß mit dieser Maßnahme der Kühleffekt wesentlich verstärkt wird.

In der Zuführung für Kühlgas im Zentrum der ringförmigen Spinnplatte können Strömungs- oder Verdrängungskörper zur Strömungsvergleichmäßigung des Kühlgases vorgesehen sein.

Eine weitere Ausgestaltung der erfindungsgemäß verwendeten Vorrichtung besteht darin, daß die Spinnlöcher der Spinndüse gruppenförmig zusammengefaßt sind.

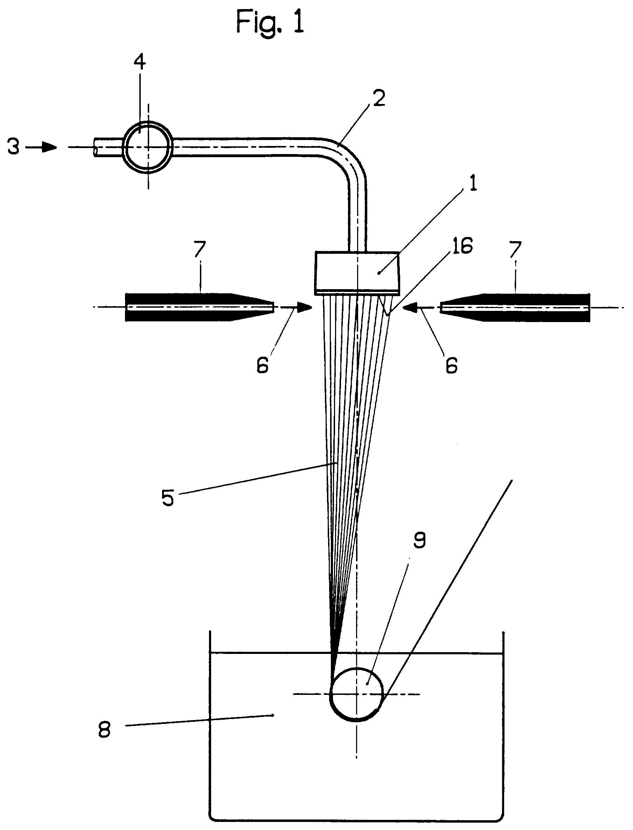

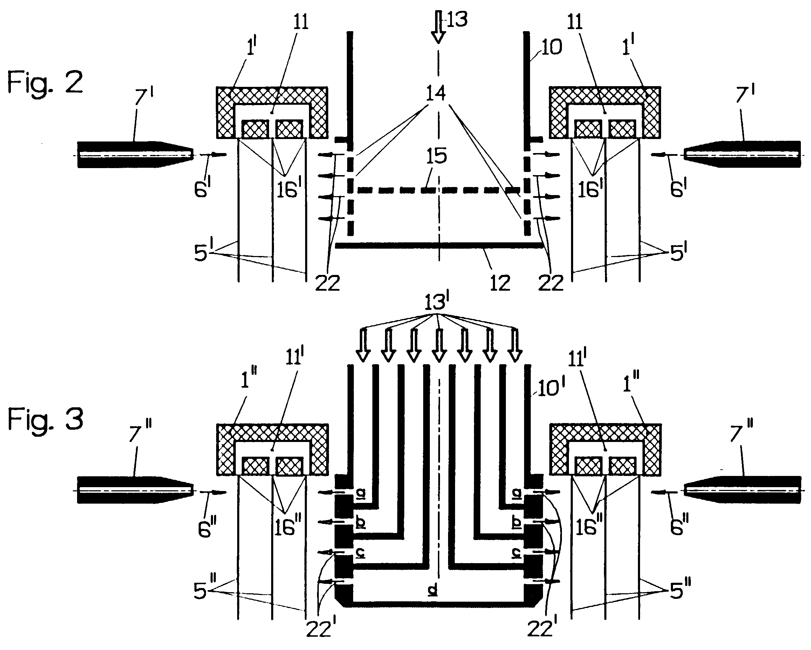

Das erfindungsgemäße Verfahren wird an Hand der Zeichnung beispielshaft noch näher erläutert, wobei die Figur 1 schematisch eine bevorzugte Ausgestaltung des erfindungsgemäßen Verfahrens zur Herstellung cellulosischer Fäden und die Figuren 2, 3 und 4 bevorzugte Ausgestaltungen der erfindungsgemäß verwendeten Spinnvorrichtung zeigen.

In Figur 1 ist mit 1 eine beheizbare (Beheizung nicht dargestellt) Spinndüse bezeichnet, welche über die Zuleitung 2 mit Spinnmasse 3, d.h. warmer Celluloselösung mit einer Temperatur von etwa 100 °C, beschickt wird. Die Pumpe 4 dient zum Dosieren der Spinnmasse und zum Einstellen des für das Extrudieren erforderlichen Druckes. Der aus der Spinndüse 1 über die Spinnlöcher 16 extrudierte Fadenverband 5 wird mit einem inerten Gas 6, vorzugsweise Luft, gekühlt, welche über die Gasdüsen 7 auf den die Spinndüse 1 verlassenden Fadenverband 5 gerichtet ist. Durch dieses Anblasen kann mit Spinndüsen gearbeitet werden, welche eine hohe Lochdichte aufweisen, ohne daß es zu einem Verkleben der Spinnfäden während des Spinnvorganges kommt.

Der Fadenverband 5 gelangt über eine Luftstrecke, welche durch den Abstand der Spinndüse 1 von der Oberfläche des Fällbades 8 definiert ist, in das Fällbad 8, wird über eine Ablenkrolle 9 zusammengefaßt und abgezogen. Das erfindungsgemäße Anblasen bzw. Kühlen des Fadenverbandes ermöglicht das Einstellen einer relativ langen Luftstrecke, sodaß beim Verzug der Fäden ausreichend Zeit zur Orientierung der Cellulosemoleküle zur Verfügung steht. Der Verzug wird erreicht, indem der Fadenverband 5 mit größerer Geschwindigkeit über die Rolle 9 abgezogen wird, als er die Spinndüse 1 verläßt.

Die Gasdüsen 7 umgeben kranzförmig den Fadenverband 5 und können entweder direkt an der Spinndüse 1 angebracht, oder eine eigene konstruktive Einheit bilden, welche wiederum mit der Spinndüse 1 verbunden ist. Naturgemäß sollte ein Wärmeübergang von der warmen Spinnmasse 3 in der Spinndüse 1 zum Kühlgas 6 möglichst unterbunden werden, was durch eine entsprechende Isolierung auf einfache Weise erreicht werden kann. Für den erfindungsgemäßen Effekt ist lediglich entscheidend, daß der Strahl des Kühlgases auf den die Spinndüse 1 unmittelbar verlassenden Fadenverband 5 gerichtet ist und zwar am besten in einer Ebene, die im wesentlichen parallel zu jener Ebene ist, welche durch die Spinnlöcher 16 gebildet wird.

Weitere Ausgestaltungen der in Figur 1 dargestellten erfindungsgemäß verwendeten Spinnvorrichtung bestehend aus Spinndüse und Kühlgasdüsen sind in den Figuren 2, 3 und 4 schematisch gezeigt. Mit Hilfe dieser Ausgestaltungen können noch dichtere Fadenverbände verarbeitet werden, d.h. es können Spinndüsen mit noch höherer Lochdichte eingesetzt werden.

Die Figuren 2 und 3 zeigen im Schnitt eine ringförmige, beheizbare (Beheizung nicht dargestellt) Spinndüse 1', 1" und eine Anblasvorrichtung bestehend aus Gasdüsen 7', 7" und einer zentralen Zuführung 10, 10' für Kühlgas 13, 13'. Die ringförmige Spinndüse 1', 1" wird an einer in der Zeichnung nicht dargestellten Stelle mit Spinnmasse 11, 11' gespeist und zu einem dichten, ringförmigen Fadenverband 5', 5" versponnen, welcher von innen und von außen mit Kühlgas beblasen wird. Die Beblasungsrichtung ist in den beiden Figuren mittels ausgezogener Pfeile 22, 22' bzw 6', 6" angedeutet.

Die in den beiden Figuren dargestellten Ausgestaltungen der erfindungsgemäß verwendeten Vorrichtung unterscheiden sich in der zentralen Zuführung 10, 10' für Kühlgas 13, 13'. Zuführung 10 ist als einfaches Rohr mit einer Prallplatte 12 und Durchlässen 14 ausgebildet. Zuführung 10 kann beispielsweise mittels eines in Figur 2 nicht dargestellten Ventilators mit Kühlgas 13 gespeist werden. Der Gasstrom 13 trifft auf die Prallplatte 12, wird horizontal umgelenkt, tritt aus den Durchlässen 14 als Gasstrom 22 aus und trifft den ringförmigen Fadenverband 5' an seiner Innenseite. In der Zuführung 10 kann ein Körper 15 zur Vergleichmäßigung der Gasströmung vorgesehen sein. Durch die Beblasung des Fadenverbandes 5' radial von außen und von innen wird der Kühleffekt wesentlich verstärkt.

Die in Figur 3 dargestellte zentrale Zuführung 10' besitzt mehrere Einzelkammern a-d, welche mit Kühlgas 13' gespeist werden. Durch diesen segmentartigen Aufbau der Zuführung 10' kann der Fadenverband mit unterschiedlichen Kühlmedien bzw. unter unterschiedlichen Bedingungen beblasen werden. Außerdem ist es mit der Ausgestaltung gemäß Figur 3 möglich, den Fadenverband über eine längere Distanz dem Kühlgas auszusetzen und so die Cellulosefäden in ihren textilen Daten noch besser zu beeinflussen.

Die Gasdüsen 7', 7" umgeben kranzförmig den ringförmigen Fadenverband 5', 5" und können entweder direkt an der Spinndüse 1', 1" angebracht, oder eine eigene konstruktive Einheit bilden, welche wiederum mit der Spinndüse 1', 1" verbunden ist. Hinsichtlich der konstruktiven Gestaltung gilt das bei Figur 1 Ausgeführte. Das gilt auch für die Zuführung 10, 10'.

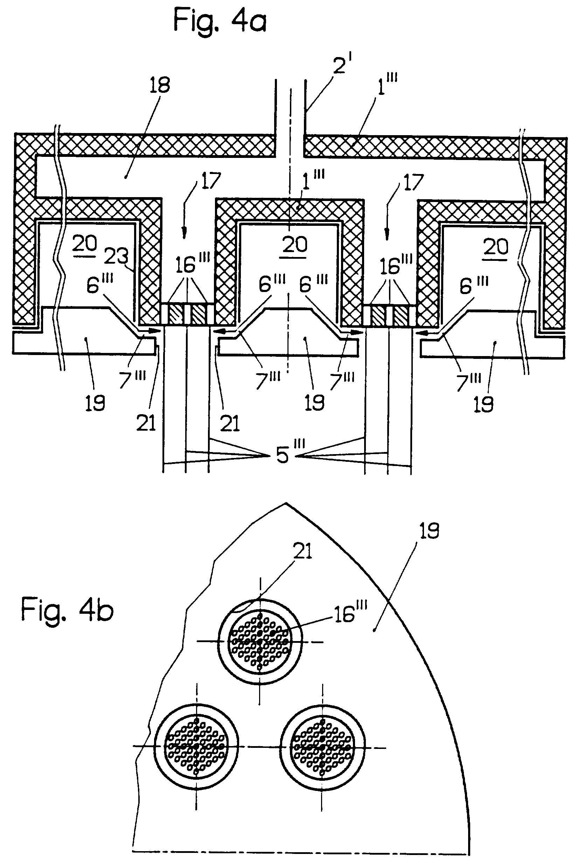

Es ist auch möglich, die Luftdüsen zur Beblasung der Fäden in die Spinndüse zu integrieren, wobei aber naturgemäß der Wärmeisolation besondere Beachtung zu schenken ist. Eine derartige Ausführungsform ist in Figur 4 dargestellt, wobei Fig. 4a eine erfindungsgemäß verwendete Vorrichtung mit zylindrischem Spinndüsengehäuse (beheizbar; Beheizung nicht dargestellt) im Schnitt zeigt und Fig. 4b einen Ausschnitt der Unteransicht dieser Ausführungsform.

Figur 4a zeigt in schematischer Darstellung eine Spinndüse 1'", wobei die Spinnlöcher 16'" am Kopf von zylinderförmigen Kanälen 17 vorgesehen sind. Die Zuführung der Spinnmasse 18 in die Spinndüse 1"' ist als 2' dargestellt. Während des Spinnvorganges wird die Spinnmasse in die Kanäle 17 gedrückt und durch die Spinnlöcher 16"' extrudiert. Die Spinndüse 1'" ist kapillarenseitig von einer kreisförmigen Platte 19 abgedeckt, welche kreisförmige Ausnehmungen 21 besitzt, die derart gestaltet und auf der Platte 19 positioniert sind, daß die extrudierten Fäden 5"' ungehindert austreten und abgezogen werden können. Durch die Abdeckung der Spinndüse 1"' entsteht ein Hohlraum 20, in welchen Kühlgas geleitet wird (nicht dargestellt). Die Platte 19 ist so gestaltet und auf der Spinndüse 1"' so angebracht, daß sie mit dem Kopf der Kanäle 17 nicht schließt, sondern ringförmige Spalte 7"' bildet, durch die Kühlgas austreten und den extrudierten Fadenverband 5"' horizontal anströmen kann (in Figur 4a durch Pfeile 6"' im Spalt 7'" dargestellt). Der ringförmige Spalt 7"' erfüllt somit die Funktion der kranzförmig angebrachten Gasdüsen 7, 7', 7" in den Ausgestaltungen gemäß den Fig. 1, 2 bzw. 3. Durch diese spezielle Konstruktion wird somit um jeden Fadenverband 5"' ein Ring aus Kühlgas geschaffen, welcher eine effiziente Kühlung eines dichten Fadenverbandes 5'" gestattet. Fig. 4b zeigt in Unteransicht der Spinndüse 1'" einen Ausschnitt der Platte 19, die Ausnehmungen 21, aus denen Kühlgas strömt und die Spinnlöcher 16"'.

Um einen Wärmeübergang von der Spinnmasse 18 zum Kühlgas im Raum 20 zu verhindern, ist der Raum 20 spinndüsenseitig mit einer Isolierung 23 ausgekleidet.

Mit den nachfoldenden Ausführungsbeispielen wird die Erfindung noch näher beschrieben.

### Beispiele 1-5

Eine gemäß dem in der EP-A - 0 356 419 beschriebenen Verfahren hergestellte Cellulose-Lösung wurde filtriert und in warmem Zustand gemäß dem in Figur 1 dargestellten Verfahren versponnen, wobei in den Beispielen 1-4 als Spinnvorrichtung die in Figur 2 und in Beispiel 5 die in Figur 4 schematisch dargestellte Ausführungsform verwendet wurde.

In der Tabelle sind für alle 5 Beispiele die pro Stunde versponnene Masse an Celluloselösung (kg/h), ihre Zusammensetzung (Masse-%), ihre Temperatur (° C) beim Verspinnen, die Lochdichte (Anzahl der Löcher/mm ) der Spinndüse, der Durchmesser der Spinnlöcher (µ), die Zufuhr der inneren Kühlluft (m³ /h), ihre Temperatur (° C), die Temperatur (° C) der abgeführten inneren Kühlluft, die Zufuhr der äußeren Kühlluft (m³/h), ihre Temperatur (° C), die pro kg versponnener Celluloselösung abgeführte Wärmemenge (kJ/kg), die Länge der Luftstrecke (mm), der Faserverzug, der NMMO-Gehalt des Fällbades (Masse-% NMMO) und der Endtiter der hergestellten Fasern (dtex) angegeben.

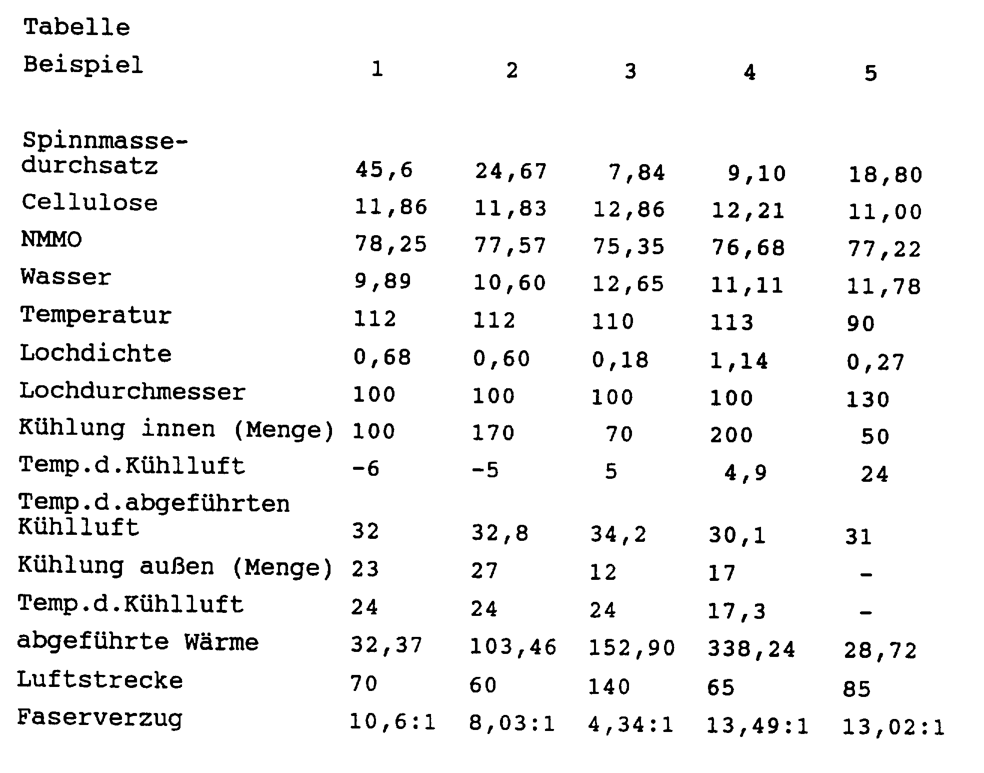

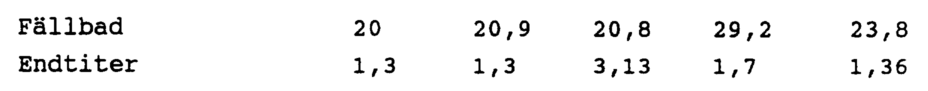

Ein Verkleben von Einzelfäden wurde in keinem der Beispiele beobachtet.

## Patentansprüche

1. Verfahren zur Herstellung cellulosischer Formkörper indem eine Lösung von Cellulose (3, 11, 11', 18) in einem tertiären Aminoxid in warmem Zustand geformt und die geformte Lösung (5, 5' 5", 5'") in ein Fällbad (8) eingebracht wird, um die enthaltene Cellulose zu fällen, wobei die warme, geformte Lösung vor dem Einbringen in das Fällbad (8) gekühlt wird, indem sie einem Gasstrom (6, 6', 6", 6'", 22, 22') ausgesetzt wird, dadurch gekennzeichnet, daß die warme, geformte Lösung dem Gasstrom (6, 6', 6", 6'", 22, 22') unmittelbar nach dem Formen ausgesetzt wird.

2. Verfahren nach Anspruch 1 zur Herstellung cellulosischer Fäden durch Formung der cellulosischen Lösung mittels einer Spinndüse (1, 1', 1", 1'"), dadurch gekennzeichnet, daß die Spinnrichtung im wesentlichen im rechten Winkel zum Gasstrom (6, 6', 6", 6'", 22, 22') steht.

3. Verfahren nach Anspruch 1 zur Herstellung cellulosischer Filme, wobei die cellulosische Lösung durch eine filmbildende Vorrichtung geführt wird, dadurch gekennzeichnet, daß die Richtung der Filmbildung im wesentlichen im rechten Winkel zum Gasstrom steht.

4. Verfahren nach einem der Ansprüche 1 bis 3, dadurch gekennzeichnet, daß die warme, geformte Lösung mindestens zwei Gasströmen (6, 6', 6", 6'", 22, 22') ausgesetzt wird.

5. Verfahren nach Anspruch 4, dadurch gekennzeichnet, daß die warme, geformte Lösung zwei Gasströmen (6, 6', 6", 6 '", 22, 22') ausgesetzt wird, welche die warme, geformte Lösung an gegenüberliegenden Seiten treffen.

6. Verfahren nach Anspruch 5 zur Herstellung cellulosischer Fäden, wobei die warme, cellulosische Lösung (11, 11') durch eine Spinndüse (1', 1") mit einer Vielzahl von Spinnlöchern (16', 16") geführt wird, welche im wesentlichen ringförmig angeordnet sind, dadurch gekennzeichnet, daß die als gesponnene Fäden vorliegende warme, geformte Lösung den beiden Gasströmen (6', 6", 22, 22') derart ausgesetzt wird, daß ein Gasstrom (22, 22') radial nach außen und der andere (6', 6") radial nach innen gerichtet ist.

7. Verfahren nach einem der Ansprüche 1 bis 6, dadurch gekennzeichnet, daß der warmen, geformten Lösung zur Kühlung eine Wärmemenge von mindestens 20 kJ/kg Lösung, vorzugsweise zwischen 20 und 350 kJ/kg Lösung, entzogen wird.

## Claims

1. Process for the preparation of cellulose mouldings in which a solution of cellulose (3,11,11',18) in a tertiary amine-oxide is moulded in a hot condition and the moulded solution (5,5',5",5''') is introduced into a precipitation bath (8) in order to precipitate the dissolved cellulose, whereby the hot moulded solution is cooled before its introduction into the precipitation bath (8) by exposure to a gas stream (6,6',6",6''',22,22'), characterised in that the hot moulded solution is exposed to the gas stream (6,6', 6",6''',22,22') immediately after moulding.

2. Process in accordance with Claim 1 for the preparation of cellulose filaments by moulding the cellulose solution by means of a spinneret (1,1',1",1'''), characterised in that the direction of spinning is substantially at right angles to the gas stream (6,6',6",6''',22,22').

3. Process in accordance with Claim 1 for the preparation of cellulose films whereby the cellulose solution is led through a film-forming device, characterised in that the direction of film formation is substantially at right angles to the gas stream.

4. Process in accordance with one of the Claims 1 to 3, characterised in that the hot moulded solution is exposed to at least two gas streams (6,6',6",6''',22,22').

5. Process in accordance with Claim 4, characterised in that the hot moulded solution is exposed to two gas streams (6,6',6",6''',22,22') which contact the hot moulded solution on opposite sides.

6. Process in accordance with Claim 5 for the preparation of cellulose filaments whereby the hot cellulose solution (11,11') is led through a spinneret (1',1") with a multiplicity of spinning holes (16',16") which are arranged in a substantially annular fashion, characterised in that the hot moulded solution which is present in the form of spun filaments is exposed to the two gas streams (6',6",22,22') in such a way that one gas stream (22,22') is directed radially outwards and the other gas stream (6',6") is directed radially inwards.

7. Process in accordance with one of the Claims 1 to 6, characterised in that an amount of heat of at least 20 kJ/kg solution, and preferably between 20 and 350 kJ/kg solution, is removed from the hot moulded solution in the cooling process.

## Revendications

1. Procédé de fabrication de corps façonnés cellulosiques dans lequel une solution de cellulose (3, 11, 11', 18) est façonnée à l'état chaud dans un aminoxyde tertiaire et la solution façonnée (5, 5', 5", 5"') est introduite dans un bain de précipitation (8) pour précipiter la cellulose contenue, la solution façonnée chaude étant refroidie avant l'introduction dans le bain de précipitation (8) en étant exposée à un courant gazeux (6, 6', 6", 6"', 22, 22'), caractérisé en ce que la solution façonnée chaude est exposée au courant gazeux (6, 6', 6", 6"', 22, 22') immédiatement après le façonnage.

2. Procédé selon la revendication 1 de fabrication de fils cellulosiques par façonnage de la solution cellulosique au moyen d'une filière (1, 1', 1", 1"'), caractérisé en ce que la direction de filage est sensiblement à angle droit par rapport au courant gazeux (6, 6', 6", 6"', 22, 22').

3. Procédé selon la revendication 1 de fabrication de films cellulosiques, dans lequel la solution cellulosique est amenée à traverser un dispositif de formation de films, caractérisé en ce que la direction de formation de films est sensiblement à angle droit par rapport au courant gazeux.

4. Procédé selon l'une des revendications 1 à 3, caractérisé en ce que la solution façonnée chaude est exposée à au moins deux courants gazeux (6, 6', 6", 6"', 22, 22').

5. Procédé selon la revendication 4, caractérisé en ce que la solution façonnée chaude est exposée à deux courants gazeux (6, 6', 6", 6"', 22, 22') qui rencontrent la solution façonnée chaude sur des côtés opposés.

6. Procédé selon la revendication 5 de fabrication de fils cellulosiques, dans lequel la solution cellulosique chaude (11, 11') est amenée à traverser une filière (1', 1") comportant une multiplicité d'orifices de filière (16', 16") qui sont agencés de manière sensiblement annulaire, caractérisé en ce que la solution façonnée chaude qui est sous forme de fils filés est exposée au deux courants gazeux (6', 6", 22, 22') de telle manière qu'un courant gazeux (22, 22') est dirigé radialement vers l'extérieur et que l'autre (6', 6") est dirigé radialement vers l'intérieur.

7. Procédé selon l'une des revendications 1 à 6, caractérisé en ce qu'une quantité de chaleur d'au moins 20 kJ/kg de solution, de préférence comprise entre 20 et 350 kJ/kg de solution, est retirée de la solution façonnée chaude pour le refroidissement.
